# EUROPÄISCHE PATENTANMELDUNG

(11) **EP 2 930 439 A2**
(43) Veröffentlichungstag der Anmeldung: **14.10.2015**
(21) Anmeldenummer: 15400001.2
(22) Anmeldetag: 09.01.2015
(51) Int. Cl.: F24D 19/10, F24F 11/00, G05D 23/19

(54) **COMPUTERGESTEUERTE REGELEINHEIT FÜR EIN HEIZ-, KÜHL-, LÜFTUNGS- UND/ODER KLIMATISIERUNGSGERÄT**

(30) Priorität: 31.01.2014 DE 102014001699
(71) Anmelder: Blinn, Pascal, 66130 Saarbrücken (DE)
(72) Erfinder: Blinn, Pascal, 66130 Saarbrücken (DE)

(57) **Zusammenfassung**

Die Erfindung betrifft eine Regeleinheit eines Heiz-, Kühl-, Lüftungs- und/oder Klimatisierungsgerätes, welche dadurch gekennzeichnet ist, dass sie aus einer zentralen Steuer- und Kommunikationseinheit, mindestens einer Kontrolleinheit und mindestens einem dazugehörigen Thermostatventil besteht. Die zentrale Steuer- und Kommunikationseinheit ist mit einer Datenbank, einem Zentralrechner und beispielsweise einem Funksensor versehen. Die Kontrolleinheiten sind mit Sensoren zum Messen und kontrollieren der Gegebenheiten im Raum und des Nutzungszustandes ausgestattet. Die Thermostatventile sind mit einem Stellmotor und beispielsweise einem Funksensor ausgestattet. Alle Bestandteile der Regeleinheit sind so zueinander angeordnet, dass die Regelung automatisiert durch ein computergesteuertes System durchgeführt wird.

## Beschreibung

Die Erfindung betrifft ein System zur automatisch computergesteuerten Regelung eines Heiz-, Kühl-, Lüftungs- und/oder Klimatisierungsgerätes.

Heiz-, Kühl-, Lüftungs- und/oder Klimatisierungsgeräte können gemäß dem Stand der Technik manuell geregelt werden. Dies ist jedoch sehr zeitintensiv und bei Nichtregelung werden Räume unnötig beheizt oder gekühlt.

Weiter können Heiz-, Kühl-, Lüftungs- und/oder Klimatisierungsgeräte auch per Fernbedienung und/oder anderen Steuermittel geregelt werden, was jedoch in der Anschaffung sehr kostenintensiv ist und das notwendige Know-How erfordert.

Des Weiteren kann den Heiz-, Kühl-, Lüftungs- und/oder Klimatisierungsgeräte mit Hilfe von speziellen Thermostatventilen ihre Regelung benutzerspezifisch angeeignet werden.

Diese Thermostatventile sind jedoch sehr kostenintensiv und die Anlernphase ist zeitintensiv und zudem ist die Regelung dann nur auf die normalen Umstände des Benutzers eingestellt und berücksichtigt keine Abweichungen von der einmal eingestellten Norm.

Weiter kann die Regelung von Heiz-, Kühl-, Lüftungs- und/oder Klimatisierungsgeräte auch mit Hilfe von Sensoren, welche die im Innenraum herrschende Luftfeuchtigkeit und/oder Temperatur erfassen und anhand von den gemessenen Daten die Heiz-, Kühl-, Lüftungs- und/oder Klimatisierungsgeräte regeln. Jedoch werden bei diesem Verfahren lediglich die thermischen Messwerte des jeweiligen Raumes zur Regelung der Heiz-, Kühl-, Lüftungs- und/oder Klimatisierungsgeräte benutzt, aber nicht der momentane Nutzungszustand des Raumes, womit Räume unnötig beheizt oder gekühlt werden.

Aufgabe der Erfindung ist es, die Nachteile des Stands der Technik zu beseitigen und ein System zur Steuerung von Heiz-, Kühl-, Lüftungs- und/oder Klimatisierungsgeräte zu schaffen, welches Zeit einspart, kostengünstig herzustellen ist und einfach zu installieren und zu bedienen ist.

Die Aufgabe wird gelöst, indem eine zentrale Steuer- und Kommunikationseinheit, mindestens eine Kontrolleinheit und mindestens ein dazugehöriges Thermostatventil vorhanden ist, welche so zueinander angeordnet sind, sodass die Regelung von Heiz-, Kühl-, Lüftungs- und/oder Klimatisierungsgeräte automatisiert durch ein computergesteuertes System betrieben wird.

Die zentrale Steuer- und Kommunikationseinheit ist beispielsweise mit Funk und/oder W-Lan ausgestattet um mit den einzelnen Kontrolleinheiten zu kommunizieren und des Weiteren auch zusätzlich beispielsweise über Smartphones, Computer, Laptop gesteuert oder ausgelesen zu werden.

Die Kontrolleinheiten, welche sich im Raum befindliche Stationen zum Messen und kontrollieren der Gegebenheiten im Raum sind, sind jeweils mit Thermosensoren und einer zusätzlichen visuellen Erkennung in Form von Kameras ausgestattet. Somit können die Thermostatventile in Abhängigkeit von der Raumtemperatur, der Nutzung des Raumes durch einen sich bewegenden Gegenstand zum Beispiel einen Menschen und dessen temperaturspezifischer Signatur geregelt werden.

Des Weiteren sind die Kontrolleinheit beispielsweise mit Funk ausgestattet, um mit der zentralen Steuer- und Kommunikationseinheit und um untereinander zu kommunizieren. Somit können sie schneller auf Veränderungen reagieren und die im Raum befindliche Thermostatventile ansteuern. Die zentrale Steuer- und Kommunikationseinheit hat eine spezifische Datenbank, welche mit verschiedenen Zeitfaktoren ausgestattet ist, um eine flexible Regelung zu realisieren, da es zum Beispiel im Bad sinnvoll ist, die Heizkörper schneller anzusteuern als zum Beispiel im Büro.

Außerdem sind in der Datenbank spezielle Zeitfaktoren für die Ansteuerung der Thermostatventile für das Betreten und das Verlassen eines Raumes durch einen sich bewegenden Gegenstand zum Beispiel ein Mensch enthalten.

Zudem ist die am nächsten zur Wohnungs- / Haustür befindliche Kontrolleinheit mit einer speziellen Signalfunktion ausgestattet, um alle Kontrolleinheiten und die zentrale Steuer- und Kommunikationseinheit zu informieren, wenn ein sich bewegender Gegenstand zum Beispiel ein Mensch die Wohnung bzw. das Haus verlässt, um somit auf einen reduzierten Sollwert zu fahren um Geld und CO² einzusparen.

Die Thermostatventile sind jeweils beispielsweise mit Funk zur Kommunikation mit den Kontrolleinheiten ausgestattet. Zudem hat jedes Thermostatventil einen elektrischen Stellmotor, der anhand des Funksignals der Kontrolleinheit das Thermostatventil auf die gewünschte Einstellung bringt, womit der Heizwasserstrom geregelt wird.

Nachfolgend soll die Erfindung anhand eines Ausführungsbeispiels im Zusammenhang mit der Zeichnung näher erläutert werden.

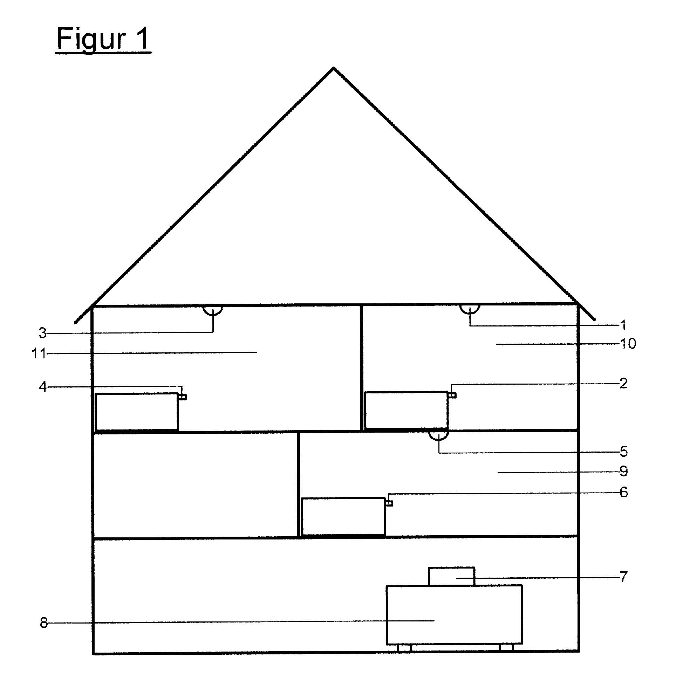

Die Figur1 zeigt schematisch ein Haus mit einem Kessel ( 8 ) an den die zentrale Steuer- und Kommunikationseinheit ( 7 ) angebracht ist und drei verschiedene Räume ( 9,10,11 ), in denen jeweils die raumspezifischen Kontrolleinheiten ( 1,3,5 ) und die dazugehörigen Thermostatventile ( 2,4,6 ) angebracht sind.

Es sind raumspezifische Kontrolleinheiten ( 1,3,5 ) vorhanden, die durch die Kommunikation mit den vorhandenen dazugehörigen Thermostatventilen ( 2,4,6 ) und der vorhandenen zentralen Steuer- und Kommunikationseinheit, die Wärmezufuhr für jeden Heizkörper und somit die Temperatur in jedem Raum steuern.

Wird zum Beispiel im Wohnzimmer ( 11 ) über die visuellen Sensoren der vorhandenen Kontrolleinheit des Wohnzimmers (3) ein sich bewegender Gegenstand zum Beispiel ein Mensch wahrgenommen, misst die Kontrolleinheit des Wohnzimmers ( 3 ) mit Hilfe der Thermosensoren die temperaturspezifische Signatur des sich bewegenden Gegenstands. Diese Werte sendet sie an die vorhandene zentrale Steuer- und Kommunikationseinheit ( 7 ), welche mit Hilfe ihrer Datenbank kontrolliert ob der sich bewegende Gegenstand ein Mensch oder etwas anderes ist.

Bekommt die vorhandene Kontrolleinheit des Wohnzimmers ( 3 ) von der vorhandenen zentralen Steuer- und Kommunikationseinheit ( 7 ) das Signal, dass der sich bewegende Gegenstand ein Mensch ist wird nach einem spezifischen Zeitfaktor, welcher je nach Raum verschieden ist, der Stellmotor des vorhandenen dazugehörigen Thermostatventils ( 4 ) per Funk von der Raumeinheit geregelt und die Temperatur im Raum auf einen Komfortsollwert angepasst.

Verlässt der sich bewegende Gegenstand das Wohnzimmer ( 11 ), kommuniziert die vorhandene Kontrolleinheit des Wohnzimmers ( 3 ) mit den anderen vorhandenen Kontrolleinheiten ( 1,5 ), dass der sich bewegende Gegenstand in einen anderen Raum begibt. Jedoch wird der Stellmotor des vorhandenen dazugehörigen Thermostatventils ( 4 ) erst nach einem spezifischen Zeitfaktor von der vorhandenen Kontrolleinheit des Wohnzimmers ( 3 ) angesteuert, um die Wärmezufuhr auf einen reduzierten Sollwert zu drosseln, da der sich bewegende Gegenstand nur kurz entfernen und wieder kommen könnte, womit ein Herunterfahren auf einen reduzierten Sollwert unvorteilhaft wäre.

Kommt der sich bewegende Gegenstand in die Küche ( 9 ) wird von der vorhandenen Kontrolleinheit der Küche ( 5 ) der gleiche Prozess wie bei der vorhandenen Kontrolleinheit des Wohnzimmers ( 3 ) vollzogen und ebenfalls nach einem spezifischen Zeitfaktor der Stellmotor des vorhandenen dazugehörigen Thermostatventils ( 6 ) angesteuert. Verlässt der sich bewegende Gegenstand jedoch die Küche ( 9 ) innerhalb einer spezifischen Zeitangabe wieder, realisiert die vorhandene Kontrolleinheit der Küche ( 5 ) das Verlassen des sich bewegenden Gegenstands und weiß, dass der Stellmotor des vorhandenen dazugehörigen Thermostatventils ( 6 ) gar nicht erst angesteuert werden muss.

Zudem wird in Räumen, die nicht so oft genutzt werden, wie zum Beispiel das Büro (10) durch die vorhandene Kontrolleinheit des Büros ( 1 ) nur die Temperatur des Raumes anhand von den Thermosensoren gemessen. Falls die Temperatur unterhalb eines reduzierten Sollwerts ist, wird der Stellmotor des vorhandenen dazugehörigen Thermostatventils ( 2 ) angesteuert, damit in den nicht so oft genutzten Räumen ein reduzierter Sollwert gewährleistet ist und ein sich bewegender Gegenstand nicht in einen unterkühlten Raum kommt.

## Patentansprüche

1. Regeleinheit eines Heiz-, Kühl-, Lüftungs- und/oder Klimatisierungsgerätes **dadurch gekennzeichnet, dass** sie aus einer zentralen Steuer- und Kommunikationseinheit, mindestens einer Kontrolleinheit und mindestens einem dazugehörigen Thermostatventil besteht, welche zueinander angeordnet sind, sodass die zentrale Steuer- und Kommunikationseinheit angebracht ist - welche über eine Datenbank und einen Zentralrechner verfügt - mindestens eine Kontrolleinheit angebracht ist - welche eine sich im Raum befindliche Station zum Messen und kontrollieren der Gegebenheiten im Raum ist und mit mindestens einem visuellen Sensor zum Beispiel eine Kamera, zur Erkennung eines sich bewegenden Gegenstandes zum Beispiel ein Mensch, einem Thermosensor, zur Erfassung der allgemeinen Temperatur und der temperaturspezifischen Signatur und beispielsweise einem Funksensor, zur Kommunikation ausgestattet ist - und mindestens eine dazugehöriges Thermostatventil angebracht ist - welches beispielsweise mit einem Funksensor, zur Kommunikation und einem elektrischen Stellmotor, zur Regelung des Heizwasserstroms in den Heizkörper ausgestattet ist - womit die Regelung automatisiert durch ein computergesteuertes System durchgeführt wird

2. Regeleinheit eines Heiz-, Kühl-, Lüftungs- und/oder Klimatisierungsgerätes nach Anspruch 1 **dadurch gekennzeichnet, dass** die Datenbank der zentralen Steuer- und Kommunikationseinheit mit den temperaturspezifischen Signaturen von allen möglichen sich bewegenden Gegenständen und den spezifischen Zeitfaktoren ausgestattet ist, sodass mit Hilfe des Zentralrechners die Daten mit den Messwerten der Kontrolleinheit abgeglichen werden können und so die entsprechenden Kommandos gesendet werden können.

3. Regeleinheit eines Heiz-, Kühl-, Lüftungs- und/oder Klimatisierungsgerätes nach einem der Ansprüche 1 oder 2, **dadurch gekennzeichnet, dass** jede Kontrolleinheit mit einem visuellen Sensor zum Beispiel eine Kamera, zur optischen Erkennung des sich bewegenden Gegenstandes und einem Thermosensor, zur Temperaturkontrolle des Raumes und des sich bewegenden Gegenstandes ausgestattet ist.

4. Regeleinheit eines Heiz-, Kühl-, Lüftungs- und/oder Klimatisierungsgerätes nach einem der Ansprüche 1 bis 3, **dadurch gekennzeichnet, dass** die zentrale Steuer- und Kommunikationseinheit, mindestens eine Kontrolleinheit und mindestens ein dazugehöriges Thermostatventil beispielsweise mit einem Funksensor ausgestattet ist, um eine schnelle Kommunikation untereinander und einen schnellen Austausch von Daten und Kommandos zu realisieren.

5. Regeleinheit eines Heiz-, Kühl-, Lüftungs- und/oder Klimatisierungsgerätes nach einem der Ansprüche 1 bis 4, **dadurch gekennzeichnet, dass** mindestens ein Thermostatventil mit einem elektrischen Stellmotor versehen ist, der nach einem Funkkommando der Kontrolleinheit automatisch den Heizwasserstrom in den Heizkörper regelt.
